# EUROPÄISCHE PATENTSCHRIFT

(11) **EP 0 874 468 B1**
(45) Veröffentlichungstag und Bekanntmachung des Hinweises auf die Patenterteilung: **09.05.2007**
(21) Anmeldenummer: 98102763.4
(22) Anmeldetag: 18.02.1998
(51) Int. Cl.: H04B 1/08

(54) **Rundfunkempfänger**
Broadcast receiver
Radiorécepteur de radiodiffusion

(30) Priorität: 07.04.1997 DE 19714236
(43) Veröffentlichungstag der Anmeldung: 28.10.1998
(73) Patentinhaber: ROBERT BOSCH GMBH, 70442 Stuttgart (DE)
(72) Erfinder: Fischer, Hans-Juergen, Dr.Ing., 31141 Hildesheim (DE); Gerlings, Karl-Heinz, Dipl.-Ing., 38259 Salzgitter (DE)

(56) Entgegenhaltungen:
- DE-A- 4 009 835
- DE-U- 9 420 590
- GB-A- 1 582 381
- US-A- 5 311 175
- PATENT ABSTRACTS OF JAPAN vol. 007, no. 070 (P-185), 23. März 1983 (1983-03-23) & JP 57 212524 A (NIPPON DENSHIN DENWA KOSHA), 27. Dezember 1982 (1982-12-27)

## Beschreibung

### Stand der Technik

Es sind bereits Rundfunkempfänger bekannt, bei denen Bedienfunktionen mittels Bedienelementen einstellbar sind. Dabei sind beispielsweise über einen ersten Wippschalter die Lautstärke, über einen zweiten Wippschalter die Empfangsfrequenz, über einen dritten Wippschalter die Balance und über weitere Wippschalter weitere Bedienfunktionen einstellbar.

GB-A-1582381 offenbart ein Beispiel einer Vorrichtung zur Dateneinstellung.

### Vorteile der Erfindung

Der erfindungsgemäße Rundfunkempfänger mit den Merkmalen des Hauptanspruchs hat demgegenüber den Vorteil, daß nur ein einziges Bedienelement zur Einstellung aller möglichen Bedienfunktionen des Rundfunkempfängers erforderlich ist. Auf diese Weise werden weitere Bedienelemente und damit Material und Kosten eingespart. Weiterhin ist für die Bedienung des Rundfunkempfängers kein Blickkontakt zur Unterscheidung mehrerer Bedienelemente erforderlich, so daß die Bedienung für den Benutzer erleichtert wird und vor allem bei Ausbildung des Rundfunkempfängers als Autoradio die Verkehrssicherheit erhöht wird, da der Benutzer bei der Bedienung des Autoradios den Straßenverkehr ununterbrochen im Auge behalten kann.

Ein weiterer Vorteil besteht darin, daß verschiedene Typen von Rundfunkempfängern mit sich unterscheidenden Bedienfunktionen trotzdem mit der gleichen Hardware realisiert werden können, da die Zuordnung der Bedienfunktionen zur gewählten Einstellung des Bedienelementes mittels Software gelöst werden kann. Somit wird die Herstellung verschiedener Typen von Rundfunkempfängern vereinfacht, wodurch auch Kosten eingespart werden können.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist es, daß sich die akustischen Signale in der Tonfrequenz unterscheiden. Auf diese Weise ist eine einfache Erzeugung der akustischen Signale beispielsweise mittels eines Frequenzgenerators möglich, die auch für den Benutzer zu einer zweifelsfreien Unterscheidung der mit den akustischen Signalen verbundenen Bedienfunktionen des Rundfunkempfängers führen.

Von besonderem Vorteil ist es, daß mittels der akustischen Signale eine Sprachwiedergabe erfolgt. Auf diese Weise wird die Zuordnung der akustischen Signale zu den Bedienfunktionen für den Benutzer weiter vereinfacht. Ein Irrtum des Benutzers bezüglich der Interpretation der zum jeweiligen akustischen Signal gehörenden Bedienfunktion wird dadurch weitestgehend ausgeschlossen.

Ein weiterer Vorteil besteht darin, daß ein weiteres Bedienelement vorgesehen ist und daß bei Betätigung des weiteren Bedienelementes weitere Informationen über die gerade akustisch wiedergegebene Bedienfunktion abrufbar sind. Auf diese Weise wird die Bedienung für den Benutzer weiter vereinfacht, da er sich die Bedeutung einer Bedienfunktion erläutern lassen kann. Dies kann besonders für selten verwendete Bedienfunktionen wichtig sein.

Besonders vorteilhaft ist es, daß ein Sprachspeicher vorgesehen ist, in dem die weiteren Informationen gespeichert sind, und daß eine Wiedergabe der im Sprachspeicher gespeicherten weiteren Informationen erfolgt. Auf diese Weise wird der Bedienkomfort für den Benutzer weiter erhöht, so daß er sich beispielsweise bei Ausbildung des Rundfunkempfängers als Autoradio während dem Abruf der weiteren Informationen weiterhin ununterbrochen dem Straßenverkehr seine volle Aufmerksamkeit schenken kann.

Vorteilhaft ist die Ausbildung des Bedienelementes als Wippschalter. Die Einstellung der Bedienfunktionen ist somit besonders einfach und ermöglicht die Realisierung beliebiger Zwischenzustände für die Einstellung der Bedienfunktion, wie beispielsweise für die Lautstärke, die Balance, die Empfangsfrequenz, usw.

Besonders vorteilhaft ist es, daß das Bedienelement als zweidimensional bewegbare Kugel ausgebildet ist, wobei eine erste Taste vorgesehen ist, mittels der eine gerade akustisch wiedergegebene Bedienfunktion auswählbar ist und wobei eine zweite Taste vorgesehen ist, mittels der eine durch die Stellung der Kugel ausgewählte Einstellung der Bedienfunktion quittierbar ist. Auf diese Weise ergibt sich eine zweidimensionale Bewegungsmöglichkeit, durch die auch mehrere Bedienfunktionen in einem einzigen Bedienschritt eingestellt werden können, wie beispielsweise die Lautstärkeeinstellung der einzelnen Lautsprecher des Rundfunkempfängers, das heißt also die gleichzeitige Einstellung der Lautstärke und der Balance.

Ein weiterer Vorteil besteht darin, daß zumindest das Bedienelement in eine Fernbedienung integriert ist. Auf diese Weise ist die Einstellung der Bedienfunktionen durch das Bedienelement nicht ortsgebunden, so daß der Komfort für den Benutzer weiter erhöht wird, was bei der Ausbildung des Rundfunkempfängers als Autoradio ebenfalls zur Erhöhung der Verkehrssicherheit führt, da die Fernbedienung beispielsweise am Lenkrad untergebracht werden kann, so daß zur Bedienung weiterhin beide Hände am Lenkrad bleiben können.

Ein weiterer Vorteil besteht darin, daß keine Bedienoberfläche für den Rundfunkempfänger mehr erforderlich ist, so daß lediglich eine Anzeigevorrichtung und gegebenenfalls ein Kassetten- und/oder Compact-Disc-Eingabeschacht an der Bedienfront des Rundfunkempfängers vorzusehen ist. Auf diese Weise wird die Übersichtlichkeit der Bedienfront des Rundfunkempfängers erhöht und der Herstellungsaufwand vereinfacht, so daß auch Kosten eingespart werden können.

### Zeichnung

Ausführungsbeispiele der Erfindung sind in der Zeichnung dargestellt und in der nachfolgenden Beschreibung näher erläutert. Es zeigen Figur 1 die Bedienfront eines erfindungsgemäßen Rundfunkempfängers mit einem Wippschalter als Bedienelement, Figur 2 einen zeitlichen Verlauf für die sukzessive Wiedergabe der akustischen Signale und die Auswahl einer Bedienfunktion, Figur 3 die Zuordnung von Tonfrequenzen für die die verschiedenen Bedienfunktionen charakterisierenden akustischen Signale, Figur 4 ein Blockschaltbild der für die Erfindung maßgeblichen Teile des Rundfunkempfängers, Figur 5 eine alternative Ausführungsform des erfindungsgemäßen Rundfunkempfängers mit Fernbedienung und Figur 6 einen Ablaufplan für die Funktionsweise des erfindungsgemäßen Rundfunkempfängers.

### Beschreibung des Ausführungsbeispiels

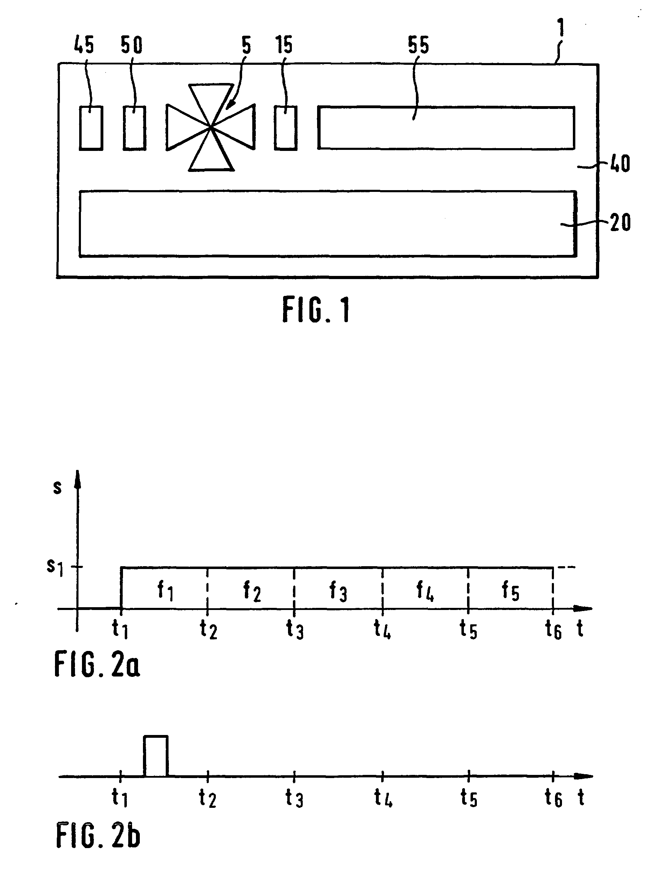

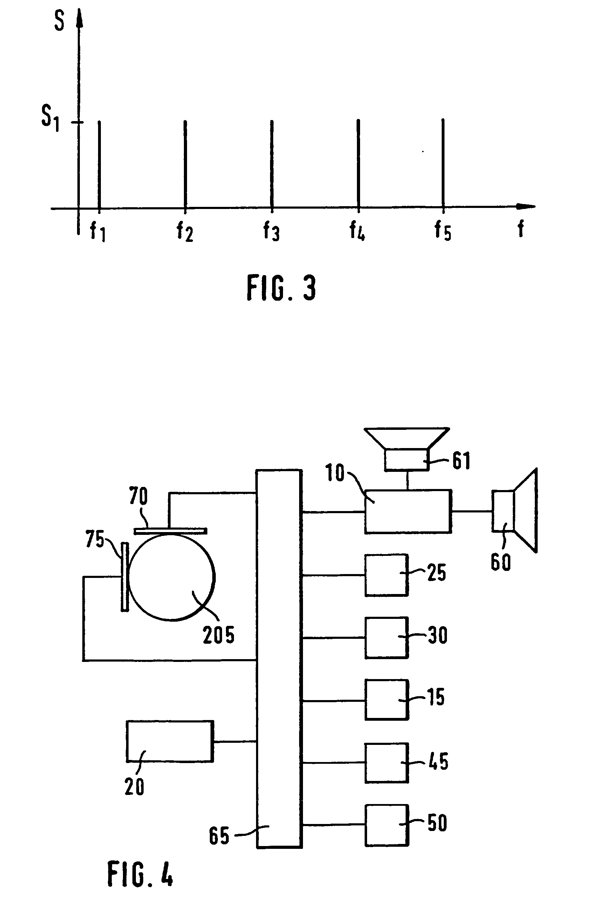

In Figur 1 kennzeichnet 1 einen als Autoradio ausgebildeten Rundfunkempfänger. Dabei ist in Figur 1 die Bedienfront 40 des Autoradios 1 dargestellt. Die Bedienfront 40 umfaßt einen Ein-/Aus-Schalter 45, eine Start-Taste 50, einen Wippschalter 5, der nach vier verschiedenen Seiten gewippt werden kann, eine Hilfe-Taste 15, einen Kassettenschacht 55 und eine Anzeigevorrichtung 20. Über den Ein-/Aus-Schalter 45 wird das Autoradio 1 ein- bzw. ausgeschaltet. Durch Betätigung der Start-Taste 50 im eingeschalteten Zustand des Autoradios 1 ertönt von einem ersten Zeitpunkt t₁ an ein akustisches Gesamtsignal, daß gemäß Figur 2a) in einem Diagramm der Signalamplitude s über der Zeit t dargestellt ist. Die Amplitude s₁ des akustischen Gesamtsignals ist dabei konstant. Dabei ist das akustische Gesamtsignal in mehrere Teilsignale aufgeteilt, wobei ein erstes akustisches Teilsignal vom ersten Zeitpunkt t₁ bis zu einem zweiten Zeitpunkt t₂, ein zweites akustisches Teilsignal vom zweiten Zeitpunkt t₂ bis zu einem dritten Zeitpunkt t₃, ein drittes akustisches Teilsignal vom dritten Zeitpunkt t₃ bis zu einem vierten Zeitpunkt t₄, ein viertes akustisches Teilsignal vom vierten Zeitpunkt t₄ bis zu einem fünften Zeitpunkt t₅, ein fünftes akustisches Teilsignal vom fünften Zeitpunkt t₅ bis zu einem sechsten Zeitpunkt t₆, usw. vorliegt. Die akustischen Teilsignale unterscheiden sich in der Frequenz. So weist das erste akustische Teilsignal eine erste Frequenz f₁, das zweite akustische Teilsignal eine zweite Frequenz f₂, das dritte akustische Teilsignal eine dritte Frequenz f₃, das vierte akustische Teilsignal eine vierte Frequenz f₄, das fünfte akustische Teilsignal eine fünfte Frequenz f₅, usw. auf. Die verwendeten Frequenzen sind dabei in Figur 3 anhand eines Diagramms der Spektralamplitude S über der Frequenz f aufgetragen. Das die akustischen Signale umfassende akustische Gesamtsignal weist dabei idealerweise Frequenzlinien bei der ersten Frequenz f₁, der zweiten Frequenz f₂, der dritten Frequenz f₃, der vierten Frequenz f₄, der fünften Frequenz f₅, usw. auf. Die Frequenzlinien haben dabei in diesem Ausführungsbeispiel alle die gleiche Spektralamplitude S₁. Dabei sind die Frequenzen beispielsweise äquidistant voneinander beabstandet, wobei zwischen den einzelnen Frequenzen die folgende Ungleichung besteht: f₁<f₂<f₃<f₄<f₅<... Die einzelnen akustischen Teilsignale mit den unterschiedlichen Frequenzen sind jeweils einer Bedienfunktion des Autoradios 1 zugeordnet, wie beispielsweise der Lautstärke, der Balance, den Höhen, den Tiefen, der Einstellung der Empfangsfrequenz, usw. Die Einstellung der Bedienfunktionen erfolgt dadurch, daß zu einem bestimmten Zeitpunkt während der Wiedergabe des akustischen Gesamtsignals der Wippschalter 5 betätigt wird. Der Wippschalter 5 kann dabei wie bereits beschrieben in vier verschiedene Richtungen betätigt werden, nämlich nach links, nach rechts, nach oben und nach unten. Im folgenden wird angenommen, daß die erste Frequenz f₁ der Einstellung der Lautstärke, die zweite Frequenz f₂ der Einstellung der Balance, die dritte Frequenz f₃ der Einstellung der Höhen, die vierte Frequenz f₄ der Einstellung der Tiefen und die fünfte Frequenz f₅ der Einstellung der Empfangsfrequenz zugeordnet sind. Erfolgt daher, wie in Figur 2b) in Form eines Impulses dargestellt, eine Betätigung des Wippschalters 5 zwischen dem ersten Zeitpunkt t₁ und dem zweiten Zeitpunkt t₂, so bedeutet dies, daß durch diese Betätigung die Lautstärke des Autoradios 1 eingestellt wird. Eine Betätigung des Wippschalters 5 nach links bedeutet dabei eine Verringerung der Lautstärke und eine Betätigung des Wippschalters 5 nach rechts bedeutet eine Erhöhung der Lautstärke. Entsprechendes gilt für die Einstellung der anderen Bedienfunktionen bei Betätigung des Wippschalters 5 während des jeweils zugehörenden Zeitintervalls. Durch die vorgesehenen vier Bedienungsrichtungen des Wippschalters 5 können auch Bedienfunktionen zusammengelegt werden, wie beispielsweise die Lautstärke- und die Balanceregelung. Auf diese Weise läßt sich bei zwei Lautsprecher die Lautstärke des einen Lautsprechers mittels der Links-Rechts-Schaltwippe des Wippschalters 5 und die Lautstärke des anderen Lautsprechers mittels der Oben-Unten-Schaltwippe des Wippschalters 5 einstellen.

Zusätzlich oder alternativ zu den Tonfrequenzen können den akustischen Signalen Sprachsignale überlagert werden. Dabei wird einfach die gerade einstellbare Bedienfunktion sprachlich ausgegeben. So erfolgt im beschriebenen Ausführungsbeispiel zwischen dem ersten Zeitpunkt t₁ und dem zweiten Zeitpunkt t₂ eine Sprachausgabe "Lautstärke", zwischen dem Zeitpunkt t₂ und dem dritten Zeitpunkt t₃ die Sprachausgabe "Balance", zwischen dem dritten Zeitpunkt t₃ und dem vierten Zeitpunkt t₄ die Sprachausgabe "Höhen", zwischen dem vierten Zeitpunkt t₄ und dem fünften Zeitpunkt t₅ die Sprachausgabe "Tiefen*"*, zwischen dem fünften Zeitpunkt t₅ und dem sechsten Zeitpunkt t₆ die Sprachausgabe "Empfangsfrequenz", usw.

Die die einzelnen Bedienfunktionen kennzeichnenden akustischen Signale werden nicht nur sukzessiv sondern auch zyklisch wiedergegeben, das heißt nach Ausgabe des die letzte Bedienfunktion kennzeichnenden akustischen Signals wird wieder das die erste Bedienfunktion kennzeichnende akustische Signal ausgegeben und die akustische Wiedergabe der Bedienfunktionen wiederholt. Es ist jedoch auch denkbar, häufiger verwendete Bedienfunktionen innerhalb eines vorgegebenen Zeitraums öfter wiederzugeben, als seltener benutzte Bedienfunktionen.

Eine gerade akustisch wiedergegebene Bedienfunktion bleibt dabei so lange aktiviert, bis nach der letzten Betätigung des Wippschalters 5 eine vorgegebene Zeit vergangen ist. Die nachfolgend akustisch wiederzugebenden Bedienfunktionen werden gegebenenfalls zeitlich verzögert zur Kennzeichnung ihrer Aktivierung wiedergegeben.

Die akustische Wiedergabe der Bedienfunktionen wird durch erneute Betätigung der Start-Taste 50 beendet. Auf die Start-Taste 50 kann jedoch auch verzichtet werden, indem die akustische Wiedergabe der Funktionen durch beliebige Betätigung des Wippschalters 5 gestartet wird. Erfolgt nach Einstellung einer Bedienfunktion durch den Wippschalter 5 für eine vorgegebene Zeit keine Betätigung des Wippschalters 5 mehr, so wird die akustische Wiedergabe der Bedienfunktionen abgeschaltet.

Wird während der akustischen Wiedergabe der Bedienfunktionen die Hilfe-Taste 15 betätigt, so werden weitere Informationen über die gerade akustisch wiedergegebene Bedienfunktion beispielsweise an der Anzeigevorrichtung 20 des Autoradios 1 dargestellt. Dabei kann Figur 2b) auch bezüglich der Betätigung der Hilfe-Taste 15 interpretiert werden, indem der Impuls zwischen dem ersten Zeitpunkt t₁ und dem zweiten Zeitpunkt t₂ eine solche Betätigung kennzeichnet. An der Anzeigevorrichtung 20 werden dann weitere Informationen über die Lautstärkeeinstellung dargestellt, beispielsweise dahingehend, daß eine Betätigung des Wippschalters 5 nach links zu einer Verringerung der Lautstärke und eine Betätigung des Wippschalters 5 nach rechts zu einer Erhöhung der Lautstärke führt. Desweiteren können die weiteren Informationen über die gerade akustisch wiedergegebene Bedienfunktion zusätzlich oder alternativ auch aus einem Sprachspeicher wiedergegeben werden, so daß der Benutzer akustisch durch Sprachausgabe über die gerade einstellbare Bedienfunktion informiert wird. Dabei wird die nächste akustisch wiederzugebende Bedienfunktion erst nach Beendigung der optischen und/oder akustischen Wiedergabe der weiteren Informationen aktiviert. Werden die weiteren Informationen an der Anzeigevorrichtung 20 dargestellt, so kann dafür eine vorgegebene Zeit reserviert werden. Eine Betätigung des Wippschalters 5 während der optischen und/oder akustischen Wiedergabe der weiteren Informationen ist ebenfalls möglich und führt zur entsprechenden Einstellung der gerade aktivierten Bedienfunktion.

Eine Beendigung der optischen und/oder akustischen Wiedergabe der weiteren Informationen kann durch erneutes Betätigen der Hilfe-Taste 15 erfolgen.

Bei akustischer Wiedergabe der weiteren Informationen können diese nach vollständiger Wiedergabe automatisch beendet oder solange wiederholt werden, bis die Hilfe-Taste 15 erneut betätigt wird.

Figur 4 zeigt ein Blockschaltbild für die erfindungsgemäße Realisierung des Autoradios 1. Dabei wird anstelle des Wippschalters 5 eine Kugel 205 als Bedienelement zur Einstellung der Bedienfunktionen verwendet, die ebenso wie der Wippschalter 5 mit seinen vier Betätigungsrichtungen eine zweidimensionale Einstellmöglichkeit für die Bedienfunktionen zur Verfügung stellt, indem eine Bewegung der Kugel 205 in vertikaler Richtung durch eine erste Walze 70 und in horizontaler Richtung durch eine zweite Walze 75 detektiert wird. Auf diese Weise ist beispielsweise die Lautstärkeeinstellung zweier Lautsprecher in einem einzigen Bedienschritt möglich, wenn wieder die Bedienfunktionen Lautstärke und Balance zu einer einzigen Bedienfunktion kombiniert werden. Durch Bewegung der Kugel 205 in horizontaler Richtung wird dabei die Lautstärke des einen, und durch Bewegung der Kugel 205 in vertikaler Richtung wird die Lautstärke des anderen Lautsprechers eingestellt.

So ist in Figur 4 die Kugel 205 dargestellt, die über die erste Walze 70 und die zweite Walze 75 jeweils mit einer Steuerung 65 verbunden ist. Über einen Sprachspeicher 10 ist die Steuerung 65 außerdem mit einer beispielsweise aus einem ersten Lautsprecher 60 und einem zweiten Lautsprecher 61 bestehenden Tonwiedergabeeinheit verbunden. An die Steuerung 65 ist außerdem die Anzeigevorrichtung 20 angeschlossen. Dasselbe gilt für die Hilfe-Taste 15, den Ein-/Aus-Schalter 45 und die Start-Taste 50. Weiterhin ist eine Bestätigungstaste 25 und eine Auswahltaste 30 an die Steuerung 65 angeschlossen. Die Bestätigungstaste 25 hat dabei die Funktion, eine gerade akustisch wiedergegebene Bedienfunktion für die Einstellung auszuwählen. Nach Einstellung dieser Bedienfunktion durch die Kugel 205 und die beiden Walzen 70, 75, deren Funktionsweise analog der einer Computermaus zu betrachten ist, wobei die Bestätigungstaste 25 und die Auswahltaste 30 mit der Kugel 205 und den Walzen 70, 75 baulich vereinigt sein können, muß diese Einstellung durch die Auswahltaste 30 quittiert werden, so daß sie durch die Steuerung 65 umgesetzt werden kann.

Eine durch Betätigung der Bestätigungstaste 25 ausgewählte gerade aktive und akustisch wiedergegebene Bedienfunktion bleibt so lange aktiviert, bis die Auswahltaste 30 gedrückt wird. Die Wiedergabe der nachfolgend zu aktivierenden Bedienfunktionen verschiebt sich zeitlich entsprechend. Verzichtet man auch bei dieser Ausführungsform auf die Start-Taste 50, so kann die akustische Wiedergabe der Bedienfunktionen durch Betätigung der Bestätigungstaste 25 ausgelöst werden. Erst die nochmalige Betätigung der Bestätigungstaste 25 führt dann zur Auswahl der gerade akustisch wiedergegebenen Bedienfunktion. Mit Betätigung der Auswahltaste 30 wird neben der Bestätigung der Einstellung der gerade aktivierten Bedienfunktion dann auch die Wiedergabe der akustischen Signale beendet.

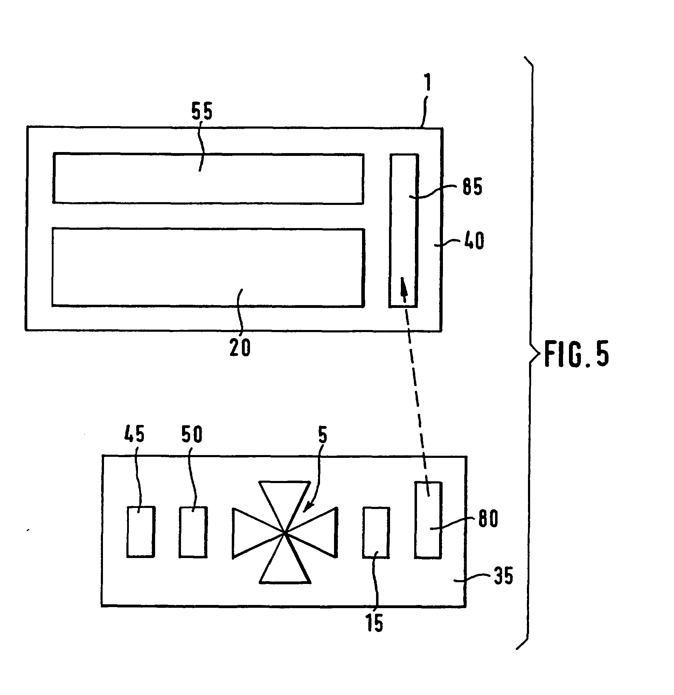

Eine weitere Ausführungsform des erfindungsgemäßen Rundfunkempfängers 1 zeigt Figur 5. Dabei sind sämtliche Bedienteile in einer Fernbedienung 35 untergebracht, so daß die Bedienfront 40 nur noch den Kassettenschacht 55 und die Anzeigevorrichtung 20 aufweist. Weiterhin weist nun die Bedienfront 40 zusätzlich einen Infrarot-Empfänger 85 auf, der Informationen von einem in der Fernbedienung 35 untergebrachten Infrarot-Sender 80 empfängt. Anstelle des in Figur 5 dargestellten Wippschalters 5 kann jedoch auch die Kugel mit den beiden Walzen 70, 75, der Bestätigungstaste 25 und der Auswahltaste 30 verwendet werden. Die Fernbedienung 35 umfaßt dabei weiterhin den Ein-/Aus-Schalter 45, die Hilfe-Taste 15 und die Start-Taste 50, falls deren Funktionalität nicht durch den Wippschalter 5 bzw. die Bestätigungstaste 25 und die Auswahltaste 30 realisiert ist. Die entsprechenden Informationen von der Fernbedienung 35 werden der Steuerung 65 im Autoradio 1 dann durch Übertragung vom Infrarot-Sender 80 an den Infrarot-Empfänger 85 mitgeteilt. Statt im Infrarot-Bereich können die von der Fernbedienung 35 abzustrahlenden Informationen natürlich auch in einem anderen geeigneten Frequenzbereich ausgesendet werden.

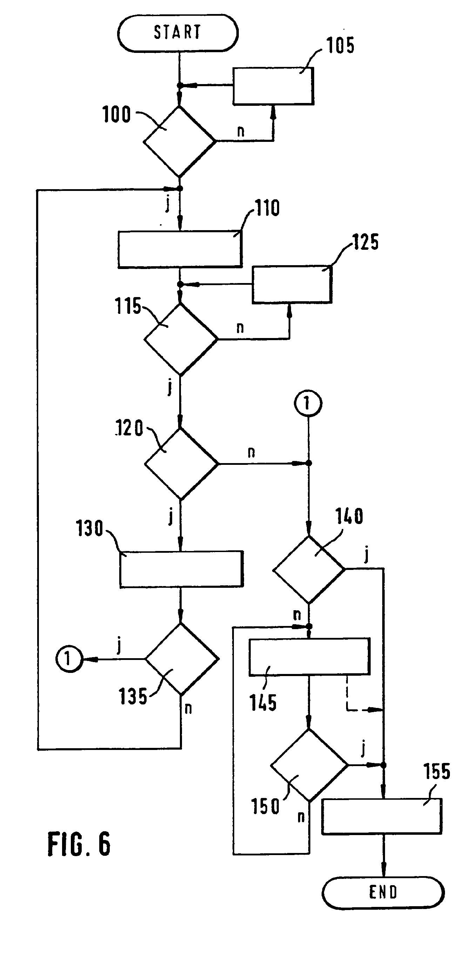

In Figur 6 ist beispielhaft ein von der Steuerung 65 abgearbeiteter Ablaufplan für eine von den oben beschriebenen Funktionsweisen des erfindungsgemäßen Rundfunkempfängers 1 dargestellt. Bei einem Programmpunkt 100 wird geprüft, ob die akustische Wiedergabe der Bedienfunktionen durch Betätigung der Start-Taste 50 bzw. des Wippschalters 5 bzw. der Bestätigungstaste 25 eingeschaltet wurde. Ist dies der Fall, so wird zu Programmpunkt 110 verzweigt, andernfalls wird zu Programmpunkt 105 verzweigt. Bei Programmpunkt 105 wird eine Warteschleife durchlaufen. Anschließend wird wieder zu Programmpunkt 100 verzweigt. Bei Programmpunkt 110 wird die sukzessive akustische Wiedergabe der verschiedenen Bedienfunktionen eingeleitet. Bei Programmpunkt 115 wird geprüft, ob der Wippschalter 5 bzw. die Bestätigungstaste 25 oder die Start-Taste 50 betätigt wurde. Ist dies der Fall, so wird zu Programmpunkt 120 verzweigt, andernfalls wird zu Programmpunkt 125 verzweigt. Bei Programmpunkt 125 wird wiederum eine Warteschleife durchlaufen. Anschließend wird wieder zu Programmpunkt 115 verzweigt. Bei Programmpunkt 120 wird geprüft, ob die Hilfe-Taste 15 betätigt wurde. Ist dies der Fall, so wird zu Programmpunkt 130 verzweigt, andernfalls wird zu Programmpunkt 140 verzweigt. Bei Programmpunkt 130 werden weitere Informationen zur gerade akustisch wiedergegebenen Bedienfunktion wiedergegeben. Bei Programmpunkt 135 wird geprüft, ob während der Wiedergabe der weiteren Informationen der Wippschalter 5 bzw. die Bestätigungstaste 25 oder die Start-Taste 50 betätigt wurde. Ist dies der Fall, so wird zu Programmpunkt 140 verzweigt, andernfalls wird nach automatischer oder durch Betätigung der Hilfe-Taste 15 initiierter Beendigung der Wiedergabe der weiteren Informationen zu Programmpunkt 110 zurückverzweigt. Bei Programmpunkt 140 wird geprüft, ob die Start-Taste 50 betätigt wurde. Ist dies der Fall, so wird zu Programmpunkt 155 verzweigt, andernfalls wird zu Programmpunkt 145 verzweigt. Bei Programmpunkt 155 wird die akustische Wiedergabe der Bedienfunktionen beendet. Anschließend wird das Programm verlassen. Bei Programmpunkt 145 werden die am Wippschalter 5 vorgenommenen Einstellungen der gerade aktivierten Bedienfunktion übergeben. Wird statt des Wippschalters 5 die Kugel 205 verwendet, so erfolgt die Übergabe der durch die Kugel 205 bewirkten Einstellungen an die gerade aktive Bedienfunktion erst nach Betätigung der Auswahltaste 30, die noch dem Programmpunkt 145 zugeordnet ist. Gemäß dem gestrichelten Pfeil in Figur 6 wird bei Verwendung der Kugel 205 nach Betätigung der Auswahltaste 30 außerdem zu Programmpunkt 155 verzweigt. Bei Verwendung des Wippschalters 5 hingegen wird im Anschluß an Programmpunkt 145 zu Programmpunkt 150 verzweigt, bei dem geprüft wird, ob nach der zuletzt erfolgten Betätigung des Wippschalters 5 innerhalb einer vorgegebenen Zeit keine weitere Betätigung des Wippschalters 5 erfolgte. Ist dies der Fall, so wird zu Programmpunkt 155 verzweigt, andernfalls wird zu Programmpunkt 145 zurückverzweigt.

Zusätzlich kann in das Autoradio 1 ein Funktelefon integriert sein. Als Bedienfunktion kann dem Benutzer beispielsweise auch vorgeschlagen werden, zwischen Rundfunkempfangsbetrieb und Funktelefonbetrieb umzuschalten, so daß durch entsprechende Betätigung des Wippschalters 5 bzw. der Kugel 205 dann ein Umschalten in den gewünschten Betriebsmodus erfolgt.

Zur weiteren Erhöhung der Übersichtlichkeit kann die Anzeigevorrichtung 20 auch von der Bedienfront 40 des Autoradios 1 entfernt werden und beispielsweise für den Benutzer noch übersichtlicher zusammen mit den Kombiinstrumenten, wie Tachometer, Drehzahlmesser, usw. angeordnet werden.

Die für die Sprachwiedergabe zwecks Angabe der gerade aktiven Bedienfunktion bzw. der zu einer gerade aktiven Bedienfunktion gehörenden weiteren Informationen erforderlichen Signale werden vorteilhafterweise zusammen im Sprachspeicher 10 abgespeichert. Die unterschiedlichen Tonfrequenzen können mittels eines Frequenzgenerators erzeugt werden.

## Patentansprüche

1. Rundfunkempfänger (1), insbesondere Autoradio, mit einem Bedienelement (5), wobei über das Bedienelement (5) eine Bedienfunktion einstellbar ist, **dadurch gekennzeichnet, daß** verschiedenen Bedienfunktionen des Rundfunkempfängers (1) unterschiedliche akustische Signale zugeordnet sind, daß eine sukzessive, vorzugsweise zyklische Wiedergabe der akustischen Signale einschaltbar ist und daß mittels des Bedienelementes (5) jeweils die Bedienfunktion einstellbar ist, deren zugehöriges akustisches Signal gerade wiedergegeben wird.

2. Rundfunkempfänger (1) nach Anspruch 1, **dadurch gekennzeichnet, daß** sich die akustischen Signale in der Tonfrequenz unterscheiden.

3. Rundfunkempfänger (1) nach Anspruch 1 oder 2, **dadurch gekennzeichnet, daß** mittels der akustischen Signale eine Sprachwiedergabe erfolgt.

4. Rundfunkempfänger (1) nach Anspruch 3, **dadurch gekennzeichnet, daß** die akustischen Signale in einem Sprachspeicher (10) abgelegt sind.

5. Rundfunkempfänger (1) nach einem der vorherigen Ansprüche, **dadurch gekennzeichnet, daß** ein weiteres Bedienelement (15) vorgesehen ist und daß bei Betätigung des weiteren Bedienelementes (15) weitere Informationen über die gerade akustisch wiedergegebene Bedienfunktion abrufbar sind.

6. Rundfunkempfänger (1) nach Anspruch 5, **dadurch gekennzeichnet, daß** die weiteren Informationen an einer Anzeigevorrichtung (20) darstellbar sind.

7. Rundfunkempfänger (1) nach Anspruch 5 oder 6, **dadurch gekennzeichnet, daß** ein Sprachspeicher (10) vorgesehen ist, in dem die weiteren Informationen in Form von Sprachsignalen gespeichert sind, und daß eine Wiedergabe der im Sprachspeicher (10) gespeicherten weiteren Informationen erfolgt.

8. Rundfunkempfänger (1) nach einem der vorherigen Ansprüche, **dadurch gekennzeichnet, daß** das Bedienelement (5) als Wippschalter ausgebildet ist.

9. Rundfunkempfänger (1) nach einem der Ansprüche 1 bis 7, **dadurch gekennzeichnet, daß** das Bedienelement (5) als zweidimensional bewegbare Kugel ausgebildet ist, wobei eine erste Taste (25) vorgesehen ist, mittels der eine gerade akustisch wiedergegebene Bedienfunktion auswählbar ist und wobei eine zweite Taste (30) vorgesehen ist, mittels der eine durch die Stellung der Kugel (5) ausgewählte Einstellung der Bedienfunktion quittierbar ist.

10. Rundfunkempfänger (1) nach einem der vorherigen Ansprüche, **dadurch gekennzeichnet, daß** zumindest das Bedienelement (5) in eine Fernbedienung (35) integriert ist.

## Claims

1. Broadcast radio receiver (1), particularly a car radio, having an operator control element (5), the operator control element (5) being able to be used to set an operator control function, **characterized in that** various operator control functions of the broadcast radio receiver (1) have different associated audible signals, **in that** successive, preferably cyclic, reproduction of the audible signals can be turned on, and **in that** the operator control element (5) can be used to set the respective operator control function whose associated audible signal is currently being reproduced.

2. Broadcast radio receiver (1) according to Claim 1, **characterized in that** the audible signals have different audio frequencies.

3. Broadcast radio receiver (1) according to Claim 1 or 2, **characterized in that** the audible signals are used to effect voice reproduction.

4. Broadcast radio receiver (1) according to Claim 3, **characterized in that** the audible signals are stored in a voice store (10).

5. Broadcast radio receiver (1) according to one of the preceding claims, **characterized in that** a further operator control element (15) is provided, and **in that** operating the further operator control element (15) allows further information to be retrieved about the operator control function which is currently being audibly reproduced.

6. Broadcast radio receiver (1) according to Claim 5, **characterized in that** the further information can be shown on a display apparatus (20).

7. Broadcast radio receiver (1) according to Claim 5 or 6, **characterized in that** a voice store (10) is provided which stores the further information in the form of voice signals, and **in that** the further information stored in the voice store (10) is reproduced.

8. Broadcast radio receiver (1) according to one of the preceding claims, **characterized in that** the operator control element (5) is in the form of a rocker switch.

9. Broadcast radio receiver (1) according to one of Claims 1 to 7, **characterized in that** the operator control element (5) is in the form of a ball which can be moved in two dimensions, with a first key (25) being provided which can be used to select an operator control function which is currently being audibly reproduced, and with a second key (30) being provided which can be used to acknowledge an operator control function setting selected by the position of the ball (5).

10. Broadcast radio receiver (1) according to one of the preceding claims, **characterized in that** at least the operator control element (5) is integrated in a remote control (35).

## Revendications

1. Récepteur radiophonique (1), notamment autoradio, comportant un élément de commande (5) permettant de régler une fonction de service,
**caractérisé en ce qu'**
à différentes fonctions de service du récepteur radiophonique (1) sont associés des signaux acoustiques différents, une reproduction successive et de préférence cyclique des signaux acoustiques peut être déclenchée, et l'élément de commande (5) permet être régler chaque fois la fonction de service dont le signal acoustique correspondant est précisément reproduit.

2. Récepteur radiophonique (1) selon la revendication 1,
**caractérisé en ce que**
les signaux acoustiques se distinguent par leur fréquence audio.

3. Récepteur radiophonique (1) selon la revendication 1 ou 2,
**caractérisé en ce qu'**
une synthèse vocale est obtenue par l'intermédiaire des signaux acoustiques.

4. Récepteur radiophonique (1) selon la revendication 3,
**caractérisé en ce que**
les signaux acoustiques sont enreistrées dans une mémoire vocale (10).

5. Récepteur radiophonique (1) selon une des revendications précédentes,
**caractérisé par**
un autre élément de commande dont l'actionnement permet d'appeler d'autres informations sur la fonction de service reproduite précisément par l'acoustique.

6. Récepteur radiophonique (1) selon la revendication 5,
**caractérisé en ce que**
les autres informations peuvent apparaître sur un afficheur (20).

7. Récepteur radiophonique (1) selon la revendication 5 ou 6,
**caractérisé par**
une mémoire vocale (10) dans laquelle les autres informations sont enregistrées sous la forme de signaux vocaux, et on fait restitution des autres informations enregistrées dans la mémoire (10).

8. Récepteur radiophonique (1) selon une des revendications précédentes,
**caractérisé en ce que**
l'élément de commande (5) est un contacteur basculant.

9. Récepteur radiophonique (1) selon une des revendications 1 à 7,
**caractérisé en ce que**
l'élément de commande (5) est une boule mobile selon deux dimensions, une première touche (25) permet de sélectionner une fonction de commande reproduite acoustiquement, ainsi qu'une seconde touche (30) permet de confirmer un réglage de la fonction de service sélectionné par la position de la boule (5).

10. Récepteur radiophonique (1) selon une des revendications précédentes,
**caractérisé en ce qu'**
au moins l'élément de commande (5) peut être intégré à une télécommande (35).
